# EUROPÄISCHE PATENTANMELDUNG

(11) **EP 2 485 220 A1**
(43) Veröffentlichungstag der Anmeldung: **08.08.2012**
(21) Anmeldenummer: 11153013.5
(22) Anmeldetag: 02.02.2011
(51) Int. Cl.: G11B 27/10, G11B 27/32, G06Q 30/00, G06F 17/30

(54) **Wiedergabe von Audio- und/oder Videodaten in einer wenigstens eine Kasse enthaltenen Umgebung**

(71) Anmelder: Wendt, Jan, 20457 Hamburg (DE)
(72) Erfinder: Wendt, Jan, 20457 Hamburg (DE)
(74) Vertreter: Graf Glück Habersack Kritzenberger

(57) **Zusammenfassung**

Die Anmeldung betrifft ein Verfahren und ein System zur Wiedergabe bzw. Erzeugung von Audio- und/oder Videodaten in einer Umgebung (12,14,16), in welcher Umsätze getätigt werden, z.B. einem Restaurant oder einem Geschäft, umfassend
wenigstens eine Datenquelle (28) für Audio- und/oder Videodaten, wenigstens eine Abspielstation (20) für die Audio- und/oder Videodaten, eine Steuerung (10), die mit dem Speicher und der Abspielstation verbunden ist,
wenigstens eine Kasse (18), die mit der Steuerung verbunden ist, wenigstens eine Speichereinheit (30,32), welche Speichereinheit konzipiert ist zur Speicherung der Kassenumsätze über die Zeit und zur Speicherung der abgespielten Audio- und/oder Videodaten oder der diese erzeugenden Programme oder Applikationen über die Zeit,
welche Steuerung aus obigen gespeicherten Daten Korrelationsdatensätze bildet, die eine zeitliche Korrelation zwischen abgespielten Audio- und/oder Videodaten bzw. zwischen den diese erzeugenden Applikationen und Programmen einerseits und den Kassenumsätzen andererseits beinhaltet, und
dass die Steuerung diese Korrelationsdatensätze bei der Wiedergabe der Audio- und/oder Videodaten bzw. bei der Programm- bzw. Applikationsauswahl berücksichtigt.

## Beschreibung

Die vorliegende Erfindung betrifft ein System und ein Verfahren zur Wiedergabe von Audio- und/oder Videodaten bzw. zum Einsatz von Applikationen (kurz: Apps für Spiel- oder andere Computerprogramme) in interaktiven Endgeräten in einer wenigstens eine Kasse enthaltenden Umgebung, z.B. in einem Restaurant.

Derzeit werden in Restaurants oder Geschäftsräumen zur Unterhaltung der Gäste bisweilen Videoclips z.B. Musikvideos abgespielt. Bisweilen sind auch interaktive Endgeräte wie z.B. Spielekonsolen in derartigen Räumlichkeiten angeordnet, auf denen Apps laufen, um die Kundenattraktion zu erhöhen. Der tiefere Zweck dieser Unterhaltung besteht darin, den Umsatz in dem entsprechenden Restaurant zu erhöhen, z.B. durch Erhöhen der Verweilzeit.

Der Erfindung liegt die Aufgabe zugrunde, eine noch effektivere Steigerung des Umsatzes bzw. der Verweilzeit durch das Abspielen von Audio- und/oder Videodaten zu ermöglichen.

Diese Aufgabe wird erfindungsgemäß durch ein System gemäß Anspruch 1 und durch ein Verfahren gemäß Anspruch 8 gelöst. Vorteilhafte Weiterbildungen der Erfindung sind Gegenstand der entsprechenden Unteransprüche.

Erfindungsgemäß werden in der Umgebung die an der Kasse getätigten Umsätze über die Zeit erfasst. Gleichermaßen wird über die Zeit erfasst, welche Audio- und/oder Videodaten abgespielt werden, z.B. in Art einer Playlist. Hierfür sind wenigstens eine Kasse und die Audio- und/oder Videoabspielvorrichtung (EN) mit einer zentralen Steuerung verbunden, die zum einen die zeitliche Erfassung der Kassenumsätze und der abgespielten Audio- und/oder Videodaten vornimmt und zum anderen eine Korrelation zwischen diesen Daten ermittelt. Auf der Basis der zeitlichen Korrelation zwischen den Kassenumsätzen und den abgespielten Audio- und/oder Videodaten lässt sich ermitteln, ob bzw. welche Audio- und/oder Videodaten zu einer Erhöhung des Kassenumsatzes führen und welche nicht. Auf diese Weise können dann die Korrelationsdaten dazu genutzt werden, um zukünftig diejenigen Audio- und/oder Videodaten abzuspielen, die den Umsatz positiv beeinflussen. Alternativ oder zusätzlich zu den Kassenumsätzen lässt sich auch die Verweildauer der sich in der Umgebung aufhaltenden Personen, z.B. über Sensoren, erfassen und zur Generierung von Verweildauer-Korrelationsdaten verwenden. Auf diese Weise kann man feststellen, welche Audio- und oder Videodaten bzw. welche diese erzeugenden Programme oder Applikationen zu einer stärkeren Verweildauer in der Umgebung führen.

Vorzugsweise werden als Audio- und/oder Videodaten Musikclips und Audioclips bzw. Musikvideos abgespielt. Es kann jedoch beispielsweise auch ein Live-TV Bild oder ein Sportprogramm abgespielt werden. Im Falle der Wiedergabe von Fernsehprogrammen kann die Datenquelle eine Fernseh- oder Radio-Programmquelle sein, z.B. terrestrisches, Kabel oder Satelliten Radio bzw. TV. Im Falle von hybriden Endgeräten, z.B. Computern oder Spielekonsolen ist die Datenquelle für die Audio- und/oder Videodaten eine Applikation.

Die Korrelationsdaten müssen sich nicht unbedingt auf die Audio- und/oder Videodaten selbst erstrecken sondern können sich auch auf Programme, z.B. Fernsehprogramme oder Applikationen, z.B. Computer- oder Spielkonsolenapplikationen erstrecken, die letztlich die Audio- und/oder Videodaten erzeugen. Parameter können so z.B. die Auswahl eines bestimmten Fernsehprogramms oder die Auswahl eines bestimmten Spiels (Applikation) sein. In diesem Fall werden die Korrelationsdaten natürlich nicht auf die generierten oder im Programm wiedergegebenen Audio- und/oder Videoinhalte bezogen sondern auf die Programme oder Applikationen selbst. Hier wird dann eine Korrelation zwischen dem Programmkanal oder dem Spiel und den Kassenumsätzen aufgestellt.

Vorzugsweise wird auch die in der Umgebung z.B. im Restaurant befindliche Anzahl von Leuten erfasst, um auf diese Weise eine bereinigte Korrelation vornehmen zu können, da der Kassenumsatz natürlich auch von der Anzahl der Besucher der Umgebung abhängt. Durch die Einbindung der Besucherzahlen kann man dann die gefundenen zeitlichen Korrelationsdaten zwischen den Kassenumsätzen und den Audio- und /oder Videodaten pro Benutzer normieren. Die bereinigten Kassenumsätze sind dann nicht mehr abhängig von dem Besuch des Restaurants. Zudem lässt sich über die Erfassung der in der Umgebung befindlichen Personen eine Verweilzeit der Personen ermitteln, so dass zusätzlich auch eine zweite Korrelation zwischen dem Abspielen der Audio- und/oder Videodaten und der Verweilzeit der Personen ermitteln. Diese Verweildauer-Korrelation kann ebenfalls verwendet werden, um die Verweilzeit der in der Umgebung befindlichen Personen und damit letztlich auch den Umsatz positiv zu beeinflussen.

Um die gewünschten Daten erfassen zu können, werden als Kasse vorzugsweise eine elektronische Kasse verwendet, deren Umsätze direkt der Steuerung zugeleitet werden.

Damit eine Steuerung Kassen für unterschiedliche Umgebungen identifizieren und den Umgebungen zuordnen kann, ist es vorteilhaft, die von einer Kasse übermittelten Daten mit einer kassenspezifischen ID zu versehen.

Vorzugsweise sind die Kassen mit der Steuerung über eine serielle Kommunikationsverbindung verbunden.

Die Abspielstation für die Audio- und/oder Videodaten kann eine Videoabspielstation oder Fernseher sein, z.B. umfassend einen oder mehrere Bildschirme. Sie hat vorzugsweise eine zentrale Datenquelle für die Audio- und/oder Videodaten, wie z.B. einen DVD- oder CD-Spieler oder Festplattenspeicher. Es können zur Speicherung der wiedergegebenen Audio- und/oder Videodaten jedoch auch andere Arten von gängigen Speichern wie Halbleiterspeicher verwendet werden. Das Abspielen erfolgt über entsprechende DVD-Player, CD-Player oder Festplattenspieler. Es ist auch möglich, die Audio- und/oder Videodateien von einen externen Server über ein Kommunikationsnetzwerk, z.B. dem Internet zu beziehen. Es kann auch ein lokal vorhandener Speicher für die Audio- und/oder Videodateien, z.B. ein Festplattenspeicher über das Kommunikationsnetzwerk mit neuen Videoclips aktualisiert werden.

Die Abspielstation kann auch ein hybrides Endgerät sein, welches eine Interaktion ermöglicht, z.B. Spielekonsolen oder Computer. Es können zudem unterschiedliche Arten von Abspielstationen in der Umgebung vorgesehen sein, z.B. Spielekonsolen und Bildschirme zum Abspielen von Musikvideos oder Live-TV Inhalten. Die Korrelation erfolgt bei hybriden Endgeräten nicht zwangsläufig zwischen Kassenumsätzen und den abgespielten Audio- und/oder Videodaten sondern auch zwischen den Kassenumsätzen und den Programmen bzw. Applikationen, die die Audio- und/oder Videodaten erzeugen, z.B. bestimmte Programme auf einem Computer oder bestimmte Spiele auf einer Konsole.

Prinzipiell kann pro Umgebung eine Steuerung verwendet werden. Eine Steuerung kann jedoch auch für mehrere bzw. unterschiedliche Umgebungen wie z.B. ein Kaufhaus und ein angrenzendes Restaurant verwendet werden. In diesem Fall müssen die Videoabspielstationen und Kassen mit einer ID versehen sein, um der Steuerung eine räumlich Zuordnung zur Umgebung zu ermöglichen.

Die Steuerung muss prinzipiell nicht zentral vorgesehen sein, sondern kann dezentral in den Umgebungen, ja sogar in Verbindung, z.B. integriert in den einzelnen Abspielgeräten und/oder Kassen vorgesehen sein.

Die zeitliche Erfassung kann minutengenau, bzw. tagesgenau erfolgen, und/oder auch zu bestimmten Anlässen, so dass man nicht nur die absolute Korrelation zur jeweiligen Tageszeit auf die Minute hat, sondern auch eine Korrelation zu Anlässen wie z.B. Ferien, Weihnachten, Ostern etc..

Neben der Verwendung der gefundenen zeitlichen Korrelationsdaten zwischen den Audio- und/oder Videodateien und den Kassenumsätzen können nicht nur zur Steuerung des Abspielens der Audio- und/oder Videodateien in der Umgebung verwendet werden, sondern können einer zentralen Stelle zugeleitet werden, die diese Information für andere Umgebungen verwendet. Die Anzahl der in der Umgebung befindlichen Personen kann erfasst werden durch an sich bekannte Erfassungssysteme wie z.B. Infrarotsensoren oder Kameras mit entsprechender Software.

Als Steuerung wird vorzugsweise ein Mikroprozessor gesteuertes System z.B. ein Personalcomputer verwendet.

Die Steuerung und die Abspielstation für die Audio- und/oder Videodateien bzw. auch die Datenquelle, in welcher die Audio- und/oder Videodateien gespeichert sind, können ebenfalls durch entsprechende Kommunikationsverbindungen miteinander verbunden sein, wie z.B. HDMI, SCART oder andere Videoübertragungsstandards.

Selbstverständlich kann jede Umgebung mehrere Kassen und Abspielstationen aufweisen.

Auch wenn jeder in jedem System bzw. in jeder Umgebung vorzugsweise nur eine Datenquelle für die Audio- und/oder Videodateien vorhanden ist, ist es auch möglich, mehrere Datenquellen vorzusehen. Zudem können an unterschiedlichen Orten in der Umgebung unterschiedliche Audio- und/oder Videodaten wiedergegeben werden, was natürlich entsprechend in der Steuerung registriert und mit den entsprechenden lokalen Kassen korreliert wird. Dann werden selbstverständlich nur die Audio- und/oder Videodateien für die Bildung der zeitlichen Korrelation verwendet, die in einer begrenzten zeitlichen Beziehung zu der entsprechenden Kasse bzw. den entsprechenden Kassen stehen. Ein geeigneter Parameter hierfür ist die Hörweite oder die Sichtweite des Abspielgerätes.

Vorzugsweise lassen sich die in dem zweiten und dritten Speicher gespeicherte Playlist, Kassenumsätze und Korrelationsdaten als auch Verweildauer-Korrelationsdaten über eine Internet-Verbindung an einen externen Server übermitteln zur weiteren Verwendung.

Die Erfindung wird nun beispielsweise anhand der schematischen Zeichnung beschrieben. Diese zeigt ein System mit einer Steuerung 10 und drei unterschiedlichen Umgebungen 12, 14, 16.

So kann z.B. die erste Umgebung 12 ein Lebensmittelgeschäft eines Einkaufszentrums sein, während Bezugszeichen 14 ein in dem Einkaufszentrum vorhandenes Restaurant bezeichnet und 16 eine in dem Einkaufszentrum vorhandene Boutique. In jeder dieser Umgebungen sind drei Kassen 18 vorgesehen und zwei Abspielstationen für Musikvideos 20. Die Kassen sind über eine serielle Kommunikationsleitung 22 mit der Steuerung 10 verbunden, wohingegen die Musikabspielstationen über entsprechende Videokommunikationsleitungen 24 mit der Steuerung verbunden sind. Die Steuerung hat des Weiteren einen Anschluss 26 für das Internet, um Online Audio- und/oder Videodaten auszutauschen oder zu aktualisieren und/oder zu beziehen. Die Steuerung 10 enthält ferner einen ersten Datenspeicher 28 für Audio- und/oder Videodaten, einen zweiten Datenspeicher 30 zur zeitlichen Erfassung der Kassenumsätze und abgespielten Videoclips (Playlist), einen dritten Speicher 32 zur Abspeicherung der von der Steuerung errechneten Korrelationsdaten.

Des Weiteren sind über eine Kommunikationsschnittstelle 34 Sensoren 36 zur Personenerfassung mit der Steuerung 10 verbunden, wobei pro Umgebung ein oder mehrere der Sensoren 36 in den entsprechenden Geschäften oder Restaurants 12, 14, 16 vorgesehen sein kann/können. Diese Daten werden entweder zur Korrektur der Korrelationsdaten verwendet, um Korrelationsdaten zu erhalten, die von der Anzahl der in den entsprechenden Geschäften sich aufhaltenden Personen bereinigt (unabhängig) sind. Alternativ oder zusätzlich lassen sich über diese Sensoren, als auch zur Erfassung von Verweildauer-Korrelationsdaten zwischen den abgespielten Musikvideos (Playlist) und der Verweildauer der sich in der Umgebung aufhaltenden Personen.

Das System arbeitet wie folgt: Während des Geschäftsbetriebs der drei Geschäfte werden Musikclips über die Abspielstationen 20 abgespielt. Die Musikclips können in den drei Geschäften 12, 14, 16 identisch oder unterschiedlich sein. Die zeitliche Abfolge der Wiedergabe der Videoclips wird in dem zweiten Speicher 30 abgespeichert. Gleichzeitig werden die mit den Kassen 18 getätigten Umsätze über die Zeit durch die zentrale Steuerung 10 erfasst und im zweiten Speicher 30 abgespeichert. Aus diesen Daten werden Korrelationsdaten gebildet, welche in dem dritten Speicher 32 abgespeichert werden. In dem dritten Speicher 32 können optional neben den oben genannten Korrelationsdaten noch bereinigte Korrelationsdaten gespeichert werden, bei welchen die von den Sensoren 36 ermittelte Personenanzahl berücksichtigt werden können, um so bereinigte Korrelationsdaten pro Besucher zu erhalten. Diese Korrelationsdaten in dem dritten Speicher 32 werden dann zur Steuerung der Abspielstation und des Datenspeichers 28 verwendet, wobei eine Ansteuerung derart erfolgt, dass Musik- oder Videoclips, bei denen besonders hohe Umsätze erzielt werden, häufiger abgespielt werden.

Durch die Personenerfassung mittels der Sensoren 36 kann auch die Verweildauer der Personen in den Umgebungen 12, 14, 16 bestimmt werden. Diese kann ebenfalls zu der im zweiten Speicher 30 abgespeicherten Playlist (zeitlicher Verlauf der abgespielten Audio- und/oder Videodaten) korreliert werden, um so Verweildauer-Korrelationsdaten zu erhalten, in welchen die Verweildauer in Korrelation zu den abgespielten Audio- und/oder Videodaten gesetzt wird. Diese Verweildauer-Korrelationsdaten werden vorzugsweise in dem dritten Speicher 32 abgelegt. Auf diese Weise lässt sich auch die Verweildauer in der Umgebung positiv beeinflussen, was allgemein wieder positive Auswirkungen auf die Umsatzentwicklung hat.

Damit eignet sich die Erfindung insbesondere zu einer Verbesserung des Umsatzes in verschiedenen Arten von Geschäften.

Es soll in der Anmeldung klargestellt sein, dass die Steuerung zentral oder dezentral angeordnet sein kann. Die Steuerung kann zudem entweder in der Umgebung oder an einem anderen Ort vorgesehen sein. Es kann so z.B. auch eine Internetverbindung mit der Steuerung bestehen. Wichtig ist hierbei nur, dass die Speicher von denen aus die Audio- und/oder Videodaten abgespielt werden, in zeitlicher Beziehung zu der Umgebung stehen.

In dem oben genannten Beispiel soll klargestellt sein, dass die Anzahl der Umgebungen für die Erfindung nicht relevant ist, ebenso wie die Anzahl der in einer Umgebung 12, 14, 16 vorhandenen Kassen 18 oder Abspielstationen 20. Die Steuerung kann zentral oder dezentral in den Umgebungen angeordnet sein. Die genannten Speicher können Speicherbereiche innerhalb des Steuerungscomputers sein, oder Halbleiterspeicher bzw. Festplatten oder externe Speichermedien.

Die Erfindung ist nicht begrenzt auf das oben beschriebene Ausführungsbeispiel, sondern kann variiert werden innerhalb des Schutzbereichs der nachfolgenden Ansprüche.

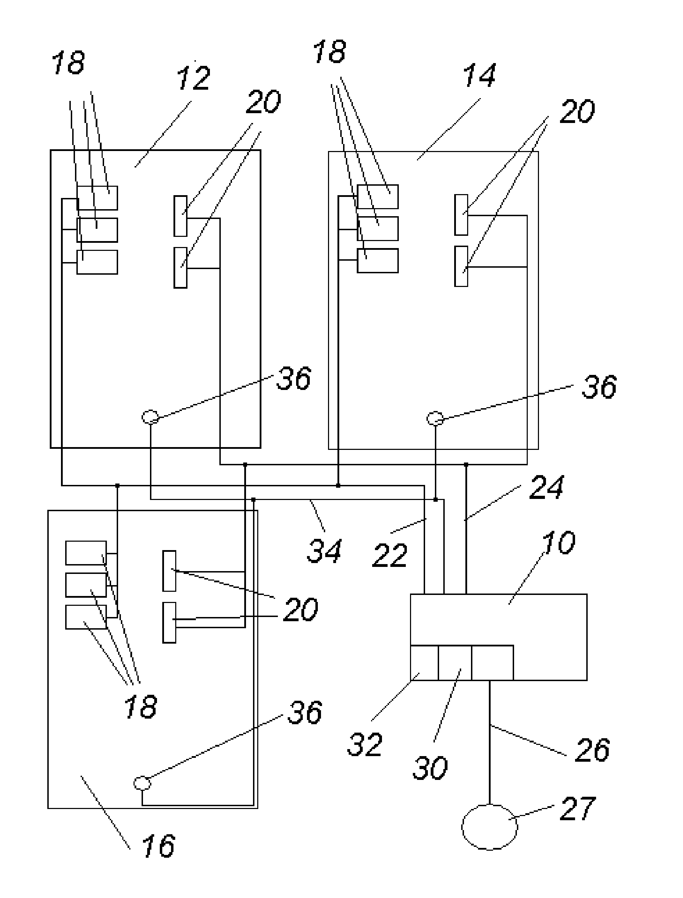

## Patentansprüche

1. System zur Wiedergabe bzw. Erzeugung von Audio- und/oder Videodaten in einer Umgebung (12, 14, 16), in welcher Umsätze getätigt werden, z.B. einem Restaurant oder einem Geschäft, umfassend wenigstens eine Datenquelle (28) für Audio- und/oder Videodaten, wenigstens eine Abspielstation (20) für die Audio- und/oder Videodaten, eine Steuerung (10), die mit dem Speicher und der Abspielstation verbunden ist,
wenigstens eine Kasse (18), die mit der Steuerung verbunden ist,
wenigstens eine Speichereinheit (30, 32), welche Speichereinheit konzipiert ist zur Speicherung der Kassenumsätze über die Zeit und zur Speicherung der abgespielten Audio- und/oder Videodaten oder der diese erzeugenden Programme oder Applikationen über die Zeit,
welche Steuerung aus obigen gespeicherten Daten Korrelationsdatensätze bildet, die eine zeitliche Korrelation zwischen abgespielten Audio- und/oder Videodaten bzw. zwischen den diese erzeugenden Applikationen und Programmen einerseits und den Kassenumsätzen andererseits beinhaltet, und
dass die Steuerung diese Korrelationsdatensätze bei der Wiedergabe der Audio- und/oder Videodaten bzw. bei der Programm- bzw. Applikationsauswahl berücksichtigt.

2. System nach Anspruch 1, **dadurch gekennzeichnet, dass** die Steuerung eine Einrichtung (36) zur Erfassung der in der Umgebung befindlichen Personen aufweist.

3. System nach Anspruch 2, **dadurch gekennzeichnet, dass** die Steuerung die Daten aus der Erfassungseinrichtung bei der Bildung der Datensätze berücksichtigt.

4. System nach einem der vorhergehenden Ansprüche, **dadurch gekennzeichnet, dass** die Abspielstation ein interaktives Gerät, z.B. eine Spielekonsole oder ein Computer ist, und dass die Audio- und/oder Videodaten im Rahmen einer Applikation wiedergegeben werden.

5. System nach einem der vorhergehenden Ansprüche,
**dadurch gekennzeichnet, dass** die Datenquelle ein Datenspeicher (30) ist.

6. System nach einem der vorhergehenden Ansprüche, **dadurch gekennzeichnet, dass** die Kasse (18) eine elektronische Kasse ist, die über eine serielle Schnittstelle (22) mit der Steuerung (10) verbunden ist.

7. System nach einem der vorhergehenden Ansprüche,
**dadurch gekennzeichnet, dass** ein Speicher (32) zur Abspeicherung der Korrelationsdatensätze mit der Steuerung (10) verbunden ist.

8. Verfahren zur Wiedergabe von Audio- und/oder Videodaten bzw. zum Einsatz von diese erzeugenden Programmen oder Applikationen (Apps) in einer wenigstens eine Kasse (18) umfassenden Umgebung (12, 14, 16), z.B. einem Restaurant, in welchem Verfahren:
- die abgespielten Audio- und oder Videodaten bzw. Programme oder Applikationen über die Zeit erfasst werden,
- die Kassenumsätze und/oder die Verweildauer der sich in der Umgebung aufhaltenden Personen über die Zeit erfasst werden,
- Korrelationsdaten zwischen der Wiedergabe der Audio- und/oder Videodaten bzw. den Programmen oder Applikationen einerseits und den getätigten Kassenumsätzen und/oder der Verweildauer andererseits ermittelt wird, und
- die Korrelationsdaten zur Steuerung des weiteren Abspielens der Audio- und/oder Videodaten bzw. zum Einsatz der Programme oder Applikationen verwendet werden.

9. Verfahren nach Anspruch 8, **dadurch gekennzeichnet, dass** die Audio- und/oder Videodaten Videoclips und Musikvideos sind.

10. Verfahren nach Anspruch 8 oder 9, **dadurch gekennzeichnet, dass** neben den Kassenumsätzen auch die Personenanzahl in der Umgebung erfasst und als Normierung für die Korrelation verwendet wird.

11. Verfahren nach Anspruch 10, dass die erfasste Personenanzahl zur Ermittlung einer Verweildauer über die Zeit verwendet wird, und dass hieraus Verweildauer-Korrelationsdaten zwischen den über die Zeit abgespielten Audio- und/oder Videodaten oder den diese erzeugenden Programmen oder Applikationen und der Verweildauer über die Zeit generiert werden, und dass die Verweildauer-Korrelationsdaten zur Steuerung des Abspielens der Audio- und/oder Videodaten bzw. zum Einsatz der Programme oder Applikationen verwendet werden.

12. Verfahren nach einem der Ansprüche 8 bis 11, **dadurch gekennzeichnet, dass** Daten über die Korrelation in einem Speicher (32) gespeichert werden.

## Geänderte Patentansprüche

### Geänderte Patentansprüche gemäss Regel 137(2) EPÜ.

**1.** System zur Wiedergabe bzw. Erzeugung von Audio- und/oder Videodaten in einer Umgebung (12, 14, 16), in welcher Umsätze getätigt werden, umfassend
wenigstens eine Datenquelle (28) für Audio- und/oder Videodaten,
wenigstens eine Abspielstation (20) für die Audio- und/oder Videodaten,
eine Steuerung (10), die mit dem Speicher und der Abspielstation verbunden ist,
wenigstens eine Kasse (18), die mit der Steuerung verbunden ist,
wenigstens eine Speichereinheit (30, 32), welche Speichereinheit konzipiert ist zur Speicherung der Kassenumsätze über die Zeit und zur Speicherung der abgespielten Audio- und/oder Videodaten oder der diese erzeugenden Programme oder Applikationen über die Zeit,
welche Steuerung aus obigen gespeicherten Daten Korrelationsdatensätze bildet, die eine zeitliche Korrelation zwischen abgespielten Audio- und/oder Videodaten bzw. zwischen den diese erzeugenden Applikationen und Programmen einerseits und den Kassenumsätzen andererseits beinhaltet, und
dass die Steuerung diese Korrelationsdatensätze bei der Wiedergabe der Audio- und/oder Videodaten bzw. bei der Programm- bzw. Applikationsauswahl berücksichtigt.

**4.** System nach einem der vorhergehenden Ansprüche, **dadurch gekennzeichnet, dass** die Abspielstation ein interaktives Gerät ist, und dass die Audio- und/oder Videodaten im Rahmen einer Applikation wiedergegeben werden.

**8.** Verfahren zur Wiedergabe von Audio- und/oder Videodaten bzw. zum Einsatz von diese erzeugenden Programmen oder Applikationen (Apps) in einer wenigstens eine Kasse (18) umfassenden Umgebung (12, 14, 16), in welchem Verfahren:
- die abgespielten Audio- und oder Videodaten bzw. Programme oder Applikationen über die Zeit erfasst werden,
- die Kassenumsätze und/oder die Verweildauer der sich in der Umgebung aufhaltenden Personen über die Zeit erfasst werden,
- Korrelationsdaten zwischen der Wiedergabe der Audio- und/oder Videodaten bzw. den Programmen oder Applikationen einerseits und den getätigten Kassenumsätzen und/oder der Verweildauer andererseits ermittelt wird, und
- die Korrelationsdaten zur Steuerung des weiteren Abspielens der Audio- und/oder Videodaten bzw. zum Einsatz der Programme oder Applikationen verwendet werden.
